# EUROPÄISCHE PATENTSCHRIFT

(11) **EP 1 277 290 B1**
(45) Veröffentlichungstag und Bekanntmachung des Hinweises auf die Patenterteilung: **20.07.2005**
(21) Anmeldenummer: 01923726.2
(22) Anmeldetag: 18.04.2001
(51) Int. Cl.: H04B 3/56

(54) **VERFAHREN UND EINRICHTUNG ZUR KONDITIONIERUNG DER ELEKTRISCHEN GEBÄUDEINSTALLATION FÜR DIE SCHNELLE DATENÜBERTRAGUNG**
METHOD AND DEVICE FOR CONDITIONING ELECTRIC INSTALLATIONS IN BUILDINGS FOR THE RAPID TRANSMISSION OF DATA
PROCEDE ET DISPOSITIF POUR RENDRE UNE INSTALLATION ELECTRIQUE DE BATIMENT APTE A LA TRANSMISSION RAPIDE DE DONNEES

(30) Priorität: 19.04.2000 DE 10019322
(43) Veröffentlichungstag der Anmeldung: 22.01.2003
(73) Patentinhaber: Interessengemeinschaft für Rundfunkschutzrechte GmbH Schutzrechtsverwertung & Co. KG., 40210 Düsseldorf (DE)
(72) Erfinder: DOSTERT, Klaus, 67706 Krickenbach (DE)
(74) Vertreter: Eichstädt, Alfred, Dipl.-Ing.
(86) Internationale Anmeldenummer: PCT/EP2001/004407
(87) Internationale Veröffentlichungsnummer: WO 2001/084737

(56) Entgegenhaltungen:
- EP-A- 0 981 188
- US-A- 5 949 327

## Beschreibung

Die Erfindung betrifft ein Verfahren und eine Einrichtung zur Konditionierung der elektrischen Gebäudeinstallation für die schnelle Datenübertragung, z.B. zur Realisierung von Telekommunikationsdiensten aller Art, insbesondere aber des schnellen Internetzugangs über die Steckdose und auch der Realisierung digitaler Audio- und Videosignalübertragung.

Aus der WO 99/30434 ist bereits eine Einrichtung bekannt, bei der über ein Stromversorgungsnetz einschließlich eines hausinternen Netzes Daten übertragen werden.

Auch aus der DE 195 44 027 C2 ist ein Bussystem für eine elektrische Hausinstallationsanlage bekannt, bei der für die Datenbusleitung dreiadrige oder auch vieradrige herkömmliche Energieleitungen mitbenutzt werden.

Ferner ist in der DE 196 54 837 A1 ein im Bereich der Gebäudeautomation eingesetztes Bussystem beschrieben, bei dem das Ein- und Auskoppeln aus den genutzten Niederspannungsleitungen über Koppeltransformatoren erfolgt.

Das für eine schnelle Datenübertragung in Frage kommende Frequenzband reicht von ca. 1 MHz bis über 30MHz. Bislang gibt es nur für den Frequenzbereich von 9kHz bis 148,5kHz unterhalb des Langwellenrundfunkbandes Nutzungsvorschriften in Form der europäischen Norm EN 50065: Signalling on low voltage electrical installations in the frequency range 3 kHz to 148,5 kHz, CENELEC, Brussels, 1991. In den interessanten höheren Frequenzbereichen gibt es keine frei verfügbaren Bänder, die neuen Diensten zugewiesen und dafür geschützt werden könnten. Die spektrale Überschneidung mit bestehenden Diensten wie Rundfunk, See- oder Flugfunk und Amateurfunk ist unvermeidlich, so daß ohne besondere Maßnahmen EMV-Probleme nicht auszuschließen sind. Denn Energieverteilnetze sind elektromagnetisch "offene" Gebilde, die als Antennen einstrahlende Funksignale aufnehmen und eingespeiste Hochfrequenz abstrahlen. Besonders in Gebäuden gibt es zudem vielfältige Störungen, die durch die Nutzung der elektrischen Energie entstehen, so daß sehr geringe Sendepegel für eine sichere Kommunikation nicht reichen werden. Besonders gravierend kann der Störumfang in Fabrikanlagen sein. Künftig werden auch durch den Einsatz sehr schneller Leistungsschalter in Form von IGBTs Verschlimmerungen des HF-Störszenarios erwartet. Die Realisierbarkeit von sicherer Kommunikation auf Energieverteilnetzen steht und fällt daher mit technisch und wirtschaftlich tragfähigen Lösungen für eine breite Palette von EMV-Problemen. Aus heutiger Sicht könnte Stromnetzen für einen Zeitraum von bis zu 20 Jahren eine Bedeutung als Kommunikationsmedium zukommen. Mit wachsendem Nutzungsumfang dehnt sich auch die EMV-Problematik aus, so daß eine ständige Anpassung und Ergänzung von EMV-Lösungen nötig sein wird.

Elektromagnetische Verträglichkeit ist stets eine zweiseitige Angelegenheit. Zum einen gilt es, ein System so zu gestalten, daß von ihm keinerlei unzulässige Störwirkung auf die Umgebung ausgeht, und zum anderen muß das System in jeder Umgebung, in der keine grenzwertüberschreitenden Störungen vorliegen, sicher und zuverlässig funktionieren. Beide Forderungen können nicht isoliert betrachtet werden, sondem sind durch enge Wechselwirkung gekennzeichnet. Wenn es mit relativ einfachen Eingriffen in bestehende Stromnetze gelingen würde, die in der Regel fehlende Symmetrie zumindest teilweise herzustellen, könnte eine signifikante Abmilderung der EMV-Probleme erreicht werden.

Bei allen Anwendungen der Kommunikation über Stromnetze soll die Signalübertragung grundsätzlich leitungsgebunden ablaufen, so dass keine Abstrahlung elektromagnetischer Felder erfolgt. Dies ist technisch durch hohe Symmetrie der Leitungsführung und den sogenannten Gegentaktbetrieb zu erreichen. Symmetrie besagt, dass Hin- und Rückleiter einer Nachrichtenverbindung eng benachbart verlegt sind, und dass sie betragsmäßig gleich grosse Ströme führen, wobei die Stromrichtungen entgegengesetzt sind. In diesem Fall kompensieren sich die Felder in der Umgebung und sinken in kleinem Abstand bereits unter die Nachweisgrenze. Das trifft z.B. sehr gut auf Koaxialkabel und verdrillte Doppeladern (engl.: twisted pair) zu. Betrachtet man dagegen typische Gebäudeinstallationen, dann erkennt man, dass solche idealen Bedingungen der Symmetrie dort nicht erfüllt sind.

Andererseits haben jedoch umfangreiche Untersuchungen der Hochfrequenzeigenschaften elektrischer Installationsnetze ergeben, daß bei moderaten Sendepegeln eine Kanalkapazität, die bis weit über 100Mbit/s reicht, zur Verfügung steht. In diesem Zusammenhang wird beispielsweise auf folgende Literaturstelle hingewiesen: Dostert K.: Power Lines as High Speed Data Transmission Channels - Modelling the Physical Limits. Proceedings of the 5^{th} IEEE International Symposium on Spread Spectrum Techniques and Applications (ISSSTA '98) Sun City, South Africa (Sept. 1998), ISBN 0-7803-4281-X, Vol. 2/3, 585-589.

Der Aufbau von Verbindungen mit mehreren Megabit/s scheint somit auf den ersten Blick unproblematisch. Die Nutzungsmöglichkeiten der Stromnetze sind jedoch leider nicht unbegrenzt, weil aufgrund der Unsymmetrie mit Signalabstrahlung zu rechnen ist, wodurch Funkdienste (Lang-, Mittel- und Kurzwellenrundfunk sowie Amateurfunkbänder) bei völlig freizügiger Frequenzfreigabe beeinträchtigt werden können. Während sich Forschung und Entwicklung in der Vergangenheit in erster Linie mit der Machbarkeit einer schnellen Datenübertragung auf den Netzen befaßt haben, stehen jetzt Lösungen für Probleme der elektromagnetischen Verträglichkeit im Vordergrund. Es gilt zum einen, für die Frequenzzuteilung und die Festlegung von Pegelgrenzwerten Kompromißlösungen zu erarbeiten, und zum anderen unzulässig hohe Signalabstrahlung durch geeignete Maßnahmen der Symmetrierung und Gegentakteinspeisung zu verhindern. Geht man z.B. davon aus, daß für eine zuverlässige Kommunikation ein Sendepegel U_{L1}, angegeben in Volt, an einer Steckdose einzuspeisen ist, ist zunächst die Frage zu beantworten, welche elektrische Feldstärke E (in Volt/Meter) daraus in einer bestimmten Entfernung von der gespeisten Leitung resultiert. Die Antwort ist alles andere als einfach, denn E hängt neben der Entfernung erheblich von der Struktur des Leitungssystems, der Art der Einspeisung und einer Vielzahl weiterer Umgebungsbedingungen ab. Bildet man das Verhältnis E/U_{L}, dann erhält man eine Kenngrösse mit der Dimension 1/m, die als elektromagnetischer Koppelfaktor oder auch Antennenfaktor bezeichnet wird.

Aus einer Reihe publizierter Ergebnisse, wie sie in Proceedings of the 3^{rd} International Symposium on Power-Line Communications and its Applications (ISPLC'99), Lancaster, UK (1999), ISBN: 90-74249-22-1 und dem Tagungsband des Funkschau-Intensivseminars "Powerline Communication und EMV", München, 1 Juli 1999, angegeben sind, und eigenen Messungen ergeben sich für unkonditionierte Netze Zahlenwerte von K≈10⁻²/m...10⁻³/m für den Koppelfaktor. Das bedeutet, daß man bei einem Sendepegel U_{L}=1V auf der Leitung (unmodulierter Träger, d.h. Bandbreite Null) in der Meßentfemung (typisch 3m) mit elektrischen Feldstärken von E=1...10mV/m (≡60...80dBµV/m) rechnen muß. Diese Werte haben besondere Bedeutung im Zusammenhang mit künftigen Grenzwertfestlegungen im Rahmen der sogenannten Nutzungsbestimmung 30 zur Frequenzzuweisungsplanverordnung (Mitteilung 1/1999 der RegTP).

Mit einem Sendepegel von 1V wäre eine gute Kommunikation auf den meisten Installationsnetzen möglich. Man beachte, daß hier nur der schmalbandige, unmodulierte Träger betrachtet wurde und auf 60...80dBµV/m führt. Mit einer breitbandigen Modulation erhält man bei normgerechter Messung erheblich geringere Werte. Des weiteren läßt sich gemäß der vorliegenden Erfindung der Koppelfaktor durch symmetrierende Netzeingriffe erheblich senken.

Bei der Untersuchung möglicher Störwirkungen durch Kommunikation auf Stromnetzen muß zwischen den zwei Netzebenen unterschieden werden:
- Netzebene 1: Verbindungen zwischen Trafostation und Hausanschluß, in der Regel Erdkabel
- Netzebene 2: Verbindungen über Gebäudeinstallationsnetze.

Die Netzebene 1 stellt die sogenannte "letzte Meile" dar. Für System- und Gerätehersteller ist das Überbrücken der Strecke nur bis zum Hausanschluß nicht zufriedenstellend. Man erwartet eine erhebliche Aufwertung der angebotenen Dienste, wenn auch hausintern keine Verkabelung mehr anfällt und damit z.B. ein PC mit dem Einstecken des Netzsteckers sofort "online" ist. Die Machbarkeit dieser Vision von Internet aus der Steckdose steht außer Frage. Dennoch wird es technisch nicht so aussehen, daß eine durchgängige Übertragung von der Trafostation zur Steckdose realisiert wird. Vielmehr wird der Hausanschluß einen Übergabepunkt darstellen, wo Netzebene 1 endet. Für das Funktionieren dieser Ebene wird der Dienstanbieter verantwortlich sein, während die Ausgestaltung der Ebene 2 weitgehend im Ermessen des Haus- oder Wohnungseigentümers liegen wird.

Hinsichtlich der Netzstrukturen bestehen bekanntlich ganz erhebliche Unterschiede zwischen den Ebenen 1 und 2. Die wichtigste Komponente im Bereich Netzebene 1 ist ohne Zweifel das Kabel. Das meistverwendete Kabel in deutschen Verteilnetzen hat eine 4-Sektor-Querschnittsgeometrie, wobei drei der Sektoren die Phasen L1, L2 und L3 des Drehstromsystems bilden, während der vierte den Nullleiter oder Neutralleiter darstellt, der an jedem Hausanschluß geerdet ist. Wenn man in ein solches Energiekabel hochfrequente Sendesignale symmetrisch auf zwei Phasen einspeist, wobei gegenüberliegende Sektoren zu bevorzugen sind, muss keine Funkabstrahlung befürchtet werden. Entsprechende Funkfeldmessungen haben das bestätigt. Wichtig ist allerdings, den Nullleiter wegen seiner vielfachen Verbindungen zur Erde nicht zu verwenden.

Das Energiekabel selbst spielt somit bei der ungewollten Aussendung elektromagnetischer Energie bei der Kommunikation über Stromnetze eine untergeordnete Rolle. Kritische Stellen auf Netzebene 1 sind auf der einen Seite das Sammelschienensystem der Trafostation und auf der anderen Seite die Hausverkabelung. An diesen Punkten muss durch geeignete Maßnahmen für eine möglichst geringe Antennenwirkung gesorgt werden. Der HF-gerechte Hausanschluss und die Konditionierung der Gebäudeinstallation, die Gegenstand der vorliegenden Erfindung ist, werden im folgenden beschrieben.

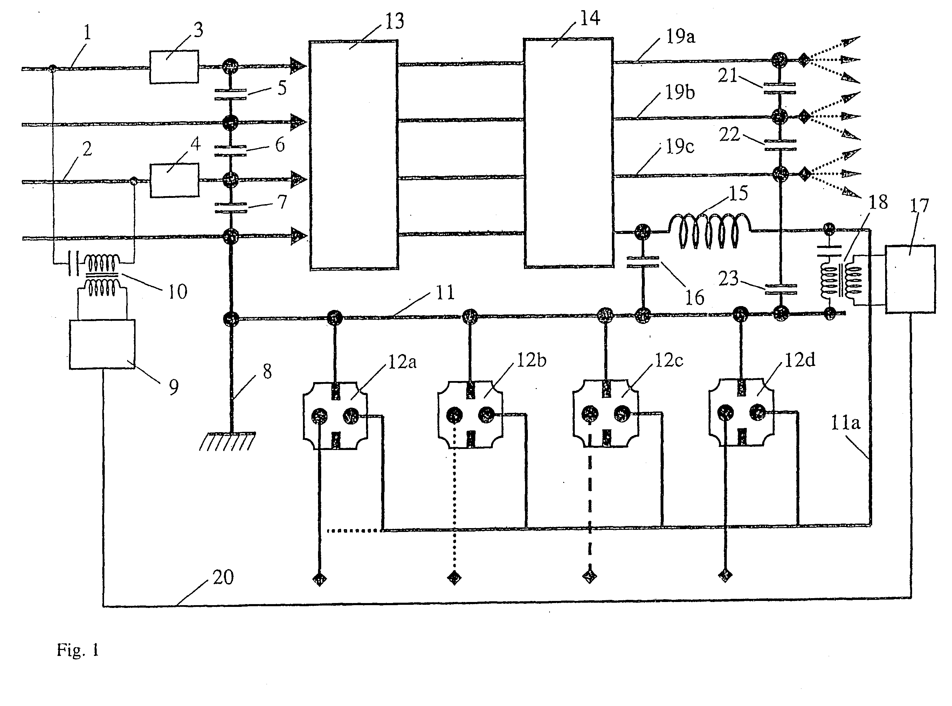

Am Hausanschluß sind gemäß Fig. 1 in die beiden hochfrequenzführenden Leiter 1 und 2 die Drosselspulen 3 und 4 einzufügen, die für hochfrequente Signale einen relativ hohen Widerstand in der Grössenordnung von etwa dem 5-fachen Wellenwiderstand des Versorgungskabels aufweisen. In diesem Fall wird der Reflexionsfaktor an der Einkoppelstelle kleiner als 10%. Für die entsprechende Festlegung der Induktivität der Drosseln 3 und 4 ist die niedrigste zu übertragende Signalfrequenz maßgebend. Aufgrund der Übertragungseigenschaften der Energiekabel auf Netzebene 1, siehe Dostert, K., Zimmermann, M.: The Low Voltage Power Distribution Network a Last Mile Access Network - Signal Propagation and Noise Scenario in the HF-Range- AEÜ 54 (2000) No. 1, pp. 13-22, ist hier der Frequenzbereich von ca. 2MHz...10MHz besonders interessant für Telekommunikationsanwendungen. Bei einem Wellenwiderstand in der Grössenordnung von 50Ω ist somit bei 2MHz eine Drosselimpedanz von ca. 125Ω zu erreichen. Daraus ergibt sich eine Induktivität von 10µH.

Da die Drosselspulen hohe Ströme bei der Netzfrequenz (50Hz) führen, die bei typischen Hausanschlüssen bis zu 40A betragen können, sind Induktivitäten in dieser Grössenordnung nicht einfach zu realisieren. Reine Luftspulen kommen wegen der erforderlichen Baugrösse nur in Ausnahmefällen in Frage. Geschickter ist es, Ringkemstrukturen aus besonderen Ferritmaterialien einzusetzen, wobei die Eigenschaften sowohl durch die Materialwahl als auch durch den Kemaufbau entscheidend bestimmt werden. Es sind Materialien zu wählen, die eine hohe Sättigungsinduktion aufweisen, und beim Kernaufbau ist das Einbringen verteilter Luftspalte von Vorteil, weil dadurch eine Scherung der Magnetisierungskennlinie bewirkt wird, so dass die Sättigung zu sehr hohen Strömen hin verschoben wird, die über den typischen Hausanschlusswerten liegen. Gute Erfahrungen wurden in diesem Zusammenhang mit Ringkemen aus "Kool-Mµ"-Werkstoff des Herstellers Magnetics gemacht. Gegenüber einer Luftspule lassen sich damit im interessierenden Frequenzbereich bei einer Netzstromamplitude von 100A noch bis zu einem Faktor 100 höhere lmpedanzwerte erzielen.

Um eine klare und saubere Trennung zwischen Netzebene 1 und 2 zu erzielen, werden gemäß Fig. 1 drei breitbandige Hochfrequenzkurzschlüsse 5, 6 und 7 zum Hauserdungspunkt 8 eingesetzt, die vorzugsweise in Form von hochfrequenztauglichen Kondensatoren realisiert sind. Hochfrequenztauglich bedeutet, dass sich auch bei Frequenzen von ca. 30MHz noch keine parasitäre Serieninduktivität bemerkbar macht, die die Kurzschlusswirkung herabsetzt. Die Auswahl geeigneter Kondensatoren ist schwierig, weil eine hohe Spannungsfestigkeit erforderlich ist, die man nur durch eine gewisse Baugröße gewährleisten kann. Die meisten Kondensatoren, die hinreichend spannungsfest sind, sind in Rollenform aufgebaut, wodurch die Neigung zur parasitärer Induktivität vorgegeben ist. Solche Bauteile sind in der Regel nur bis zu Frequenzen unterhalb 5MHz brauchbar. Für die höheren Frequenzen sind sogenannte Chipkondensatoren vorteilhaft, die in Waffelform aufgebaut sind, d.h. sie haben Quaderform, wobei die beiden Kondensatorflächen wechselweise mit dem Dielektrikum als Zwischenlage geschichtet sind. Weil hier keine durchgehende gewickelte Leiterstruktur vorhanden ist, ergeben sich sehr geringe parasitäre Induktivitäten. Kondensatoren dieser Bauart sind erst in jüngster Zeit mit der erforderlichen hohen Spannungsfestigkeit in den hier benötigten Grössen von ca. 50nF verfügbar. Bei 50nF erhält man bei 2MHz eine Impedanz von ca. 1,5Ω, so dass sich aufgrund der vorgeschalteten Drosseln, die ca. 125Ω aufweisen, praktisch eine perfekte HF-Sperre ergibt.

Die Sendeendstufe eines Modems 9 zur Kommunikation auf Netzebene 1 kann jetzt unabhängig von allen elektrischen Vorgängen im Haus mit Hilfe des Koppelübertragers 10 an den Wellenwiderstand des Versorgungskabels angepasst werden. Ein so gestalteter Übergabepunkt stellt sicher, daß die Netzebene 1 von allen Vorgängen in der Kundenanlage unbeeinflußt bleibt. Nur so kann letztlich die Sicherheit und Verfügbarkeit angebotener Dienste gewährleistet werden.

Zu begründen ist noch, warum nur in den beiden mit Hochfrequenz beaufschlagten Leitern 1 und 2 Drosseln erforderlich sind und nicht in den beiden übrigen. Durch die enge Nachbarschaft der vier Leiter in einem Kabel sind elektromagnetische Kopplungen unvermeidlich, d.h. es wird zwangsläufig zu einem gewissen Übersprechen kommen. Dieses wird unmittelbar in der Nähe der Koppelstelle am stärksten sein, weil dort der Sendepegel am größten ist.

Hier befinden sich jedoch die HF-Kurzschlüsse 5, 6, und 7, die die ungewollte Ausbildung hochfrequenter Spannungen am Hausanschlusspunkt sicher verhindern, weil die Koppelimpedanzen zwischen den Leitern im interessierenden Frequenzbereich stets erheblich größer sind, als die Impedanzen der HF-Kurzschlüsse.

Während so auf der Netzebene 1 eine gute Netzkonditionierung erreicht ist, die eine elektromagnetisch verträgliche und zuverlässige, d.h. vom Netzbetrieb unabhängige Kommunikation bei hohen Frequenzen gestattet, ist die weitergehende Kommunikation über Gebäudeinstallationsnetze Gegenstand der folgenden Betrachtungen. Innerhalb von Gebäuden ist die elektromagnetische Verträglichkeit eine besondere Herausforderung, weil hier keine Möglichkeiten einer Netzaufbereitung bekannt sind. Sowohl für hochfrequenzmäßiges Isolieren als für eine symmetrische, reine Gegentaktsignalspeisung sind keine Lösungsansätze bekannt. Somit musste bislang mit einer relativ starken Koppelwirkung zwischen der Signalspannung U_{L} auf der Leitung und der abgestrahlten Feldstärke gerechnet werden, d.h. der Koppelfaktor konnte durchaus Werte, die erheblich größer als 10⁻³/m sind, annehmen.

Die Hauptursache hierfür ist die Struktur typischer Gebäudeinstallationsnetze. Obwohl die zu überbrückenden Entfernungen auf Netzebene 2 erheblich kürzer sind als auf Netzebene 1 und sich dadurch zum einen höhere Frequenzen (über 30MHz) nutzen lassen und zum anderen geringe Sendepegel genügen, sind dennoch Probleme der elektromagnetischen Verträglichkeit zu befürchten, weil das Mass der Unsymmetrie besonders hoch ist. Dies lässt sich an folgendem Beispiel verdeutlichen:

Die Einspeisestelle für hochfrequente Kommunikationssignale in Gebäuden ist typischerweise die 230V-Netzsteckdose, zu der standardmäßig drei Leitungen führen, nämlich eine Phase (L1, L2 oder L3), der Nullleiter und der Schutzleiter. Bislang wird von einer parallelen Einspeisung zwischen Phase und Nullleiter ausgegangen. Während in einem Gebäude ein Pol aller Steckdosen zwangsläufig am selben galvanisch durchverbundenen und am Hausanschluss geerdeten Nullleiter angeschlossen ist, sind die drei Phasen im Idealfall gleichmäßig auf die Steckdosen verteilt. Eine galvanische Verbindung der Phasen ist somit erst im Niederspannungstransformator gegeben. Die hochfrequenzmäßige Verbindung erfolgt jedoch gemäß Fig. 1 am Hauserdungspunkt, allerdings in Form eines Kurzschlusses aller HF-Signale bei gleichzeitiger Erdung. Dies ist im Sinne einer Kommunikationsanwendung sehr ungünstig, insbesondere wenn man sich vorstellt, dass ein sendendes Modem an einer Steckdose, z.B. zwischen L1 und N, einspeist und das empfangende Modem sich an einer Steckdose mit L2 befindet. Hierher können nur noch sehr schwache Nutzsignale durch Übersprechen zwischen L1 und L2 gelangen, falls die beiden Phasen über eine genügend große Länge parallel geführt sind. Bei typischen Hausinstallationen muss das keineswegs der Fall sein, so dass man bei ungünstigen Konstellationen selbst über relativ kleine Entfernungen zwischen Sender und Empfänger schon mit Ausfällen rechnen muss. Auf der anderen Seite kann bezüglich der Leitungsstruktur eine gravierende Unsymmetrie vorhanden sein, denn es ist keinesfalls gewährleistet, dass Phase und Nullleiter, die zu einer Steckdose führen, im gesamten Leitungszug parallel und eng benachbart verlegt sind. Sie können im Extremfall sogar aus entgegengesetzten Richtungen kommen. Dies führt unmittelbar zu einem hohen Gleichtaktsignal am Speisepunkt, so dass selbst bei geringer Sendeleistung eine merkliche Abstrahlung elektromagnetischer Wellen zu beobachten ist.

Während die betrachtete Kurzschlusswirkung der Phasen am Hausanschluss sich prinzipiell durch Einfügen von zusätzlichen Drosselspulen auf Hausseite beseitigen ließe, würden die Probleme der elektromagnetischen Verträglichkeit dadurch nicht gelöst, weil keine Erhöhung der Leitungssymmetrie bewirkt wird.

Mit den bislang bekannten Techniken ist somit eine Ausschöpfung der Ressourcen, die Gebäudeinstallationsnetze für schnelle Kommunikationsanwendungen bieten, nur sehr eingeschränkt möglich. Hier soll die nachstehend beschriebene besondere Ausgestaltung der vorliegenden Erfindung Abhilfe schaffen. Zur Erläuterung sind vier Zeichnungen vorgesehen:
- Fig. 1: Konditioniertes Hausnetz mit einem Fehlerstromschutzschalter (Standard)
- Fig. 2: Konditioniertes Hausnetz mit mehreren Fehlerstromschutzschaltern
- Fig. 3: Konditioniertes Hausnetz mit Schutzleiter und ohne Fehlerstromschutzschalter
- Fig. 4: Konditioniertes Hausnetz ohne Fehlerstromschutzschalter und ohne Schutzleiter (Altbau).

Anhand von Fig. 1 wurde der Hausübergabepunkt als Anschluss zu Netzebene 1 bereits beschrieben. Für die Netzebene 2 liegt der Erfindung die Idee zugrunde, alle drei Phasen und den Schutzleiter bei der Kommunikation mittels hochfrequenter Signale als "Masse" zu konfigurieren und den Nullleiter gegenüber dieser Masse mit Hochfrequenz zu speisen. Dieses wird erfindungsgemäß dadurch erreicht, dass nach dem Stromzähler 13 und dem Fehlerstromschutzschalter 14 eine Drossel 15 in den Nullleiter eingefügt wird, so dass der hausseitige Abgang des Nullleiters hochfrequenzmäßig eine "Insel" bildet, die mit den übrigen Leitern und der Erdung nur noch schwach gekoppelt ist. Der Aufbau der Drossel ist sehr einfach, da für die gebäudeinteme Kommunikation vorwiegend ein Frequenzbereich oberhalb von 10MHz von Interesse ist. Die Frequenzaufteilung zwischen Netzebene 1 und 2 ist zur Zeit noch Gegenstand von Standardisierungsüberlegungen, wobei für Ebene 1 der Bereich 2...10MHz und für Ebene 2 der Bereich >10MHz angedacht ist. Mit einer Induktivität von ca. 5µH sind bereits sehr gute Ergebnisse zu erzielen. Zur Vermeidung von Sättigungsproblemen kann eine geeignete Spule materialfrei, d.h. als Luftspule ausgeführt werden. Eine Induktivität von 5µH kann z.B. mit einer zylinderförmigen Luftspule mit einem Durchmesser von 3,5cm und einer Länge von ca. 8cm erreicht werden. Auch andere Bauformen wie z.B. ein Toroid oder eine Spiralform können zur Anwendung kommen. Für den Fall, dass eine Kommunikation mit Frequenzen weit unter 10MHz von Interesse ist, ist es zweckmäßig, Ferrritmaterialien zur Erhöhung der Induktivität einzusetzen. Die auf Netzebene 1 bewährten Ringkerne aus "Kool-Mµ"-Werkstoff können hier vorteilhaft verwendet werden.

Gemäß Fig. 1 kann nun die Einspeisung der hochfrequenten Signale zwischen Schutzleiter 11 und hochfrequenzmäßig isoliertem Nullleiter 11a erfolgen, indem ein Modem 17 mittels eines Übertragers 18 an diese Leiter gekoppelt wird. Mit Hilfe eines HF-Kurzschlusses 16 in Form eines Kondensators wird verhindert, dass hochfrequente Ströme über den Fehlerstromschutzschalter fließen. Hier genügen Kapazitäten in der Größenordnung 50...100nF, wobei gute Hochfrequenzeigenschaften erforderlich sind. An die Spannungsfestigkeit sind dagegen geringe Anforderungen zu stellen, weil zwischen Schutz- und Nullleiter an dieser Stelle nur sehr geringe Potentialdifferenzen vorhanden sind. Die drei Phasen 19a, 19b und 19c sind an der Signalübertragung nicht direkt beteiligt. Aufgrund ihrer hochfrequenzmäßigen Masseverbindung entfalten sie eine im Sinne der elektromagnetischen Verträglichkeit erwünschte Abschirmwirkung.

Aufgrund der beschriebenen Konditionierung in Richtung Netzebene 1 ist am Hausanschlusspunkt eine hochfrequenzmäßige Erdung aller ankommenden Leiter gegeben. Von diesem Erdungspunkt geht der hausinteme Schutzleiter 11 aus, der mit den entsprechenden Kontakten aller Schutzkontakt-Steckdosen des Gebäudes verbunden ist. Die einschlägigen Normen schreiben die Verwendung solcher Steckdosen verbindlich vor. In Fig. 1 sind exemplarisch vier Steckdosen 12a-12d mit dem entsprechenden Schutzleiteranschluss dargestellt. Der weitere gemeinsame Leiter, der zu allen Steckdosen führt, ist der Nullleiter. Die Phasen hingegen sind - wie schon erwähnt - in der Regel nach energietechnischen Gesichtspunkten auf die Steckdosen verteilt. Über die Verteilung existieren meist keine Aufzeichnungen. Die Kopplung eines Modems zur Kommunikation über das Gebäudestromnetz erfolgt daher an einer Steckdose stets auf Schutz- und Nullleiter in analoger Weise wie es für die Komponenten 17 und 18 beschrieben wurde.

Die erfindungsgemäße Verwendung des Nullleiters zur Führung hochfrequenter Signale bringt bislang nicht erreichte Vorteile, sowohl hinsichtlich der Übertragungsqualität als auch der elektromagnetischen Verträglichkeit; im Einzelnen sind dies.
- Schutz- und Nullleiter sind im Normalfall auf nahezu gleichem elektrischem Potential. Das bedeutet, dass man zwischen den Leitern weder eine Netzwechselspannung noch Störsignale vorfindet. Damit sind zum einen die Anforderungen an die Spannungsfestigkeit des Kondensators im Koppler 18 gering, und zum anderen kann auf eine Potentialtrennung zwischen Modem und Netz sogar ganz verzichtet werden. Im letzteren Fall entspricht die Modem-Masse dem Schutzleiterpotential, und die Signalkopplung erfolgt unmittelbar über einen Kondensator auf den Nullleiter. In der Praxis kann der Einsatz eines Übertragers dennoch sinnvoll sein, z.B. zur Anpassung der Sendeendstufen-Impedanz an den Leitungswellenwiderstand.
- Dadurch, dass Null- und Schutzleiter am Hausanschluss galvanisch verbunden sind, wird der Großteil der Störungen, die durch den Netzbetrieb entstehen, kurzgeschlossen, so dass man zwischen diesen Leitern nur sehr geringe Störpegel vorfindet. Des weiteren verlaufen die beiden Leiter - wie in Fig. 1 angedeutet - praktisch immer parallel zu jeder Steckdose hin. Man hat deshalb im gesamten Gebäude ein im Vergleich zum übrigen Stromnetz relativ gut symmetriertes Zweidrahtnetz vor sich, das zum einen gute Übertragungseigenschaften aufweist, und zum anderen nur wenig zur Signalabstrahlung neigt, weil eingespeiste hochfrequente Signale sich von der Einspeisestelle über relativ große Längen im Gegentakt ausbreiten können. Die unerwünschte Gegentakt-Gleichtakt-Konversion findet somit erst bei schon stark abgeschwächtem Sendesignal statt. Man kann deshalb bei der erfindungsgemäßen Nutzung von Gebäudeinstallationsnetzen zur schnellen Datenübertragung von deutlich geringeren elektromagnetischen Koppelfaktoren ausgehen als sie z.B. im Rahmen der Studie Powerline (Studienergebnisse zu EMV-Problemen) im Auftrag der RegTP; http://www.regtp.de/tech_reg_tele/start/fs_06.html bestimmt wurden.

Zur Unterstützung der hochfrequenzmäßigen Erdung der drei Phasen kann es, insbesondere bei weitläufigen Installationsnetzen in großen Gebäuden, vorteilhaft sein, zusätzliche Kondensatoren 21, 22 und 23, z.B. in Unterverteilungen einzubauen.

Zur Realisierung der durchgängigen Kommunikation von Trafostation zur Steckdose ist noch eine Verbindung 20 der beiden Modems 9 und 17 am Hausanschluss in Fig. 1 erforderlich. Ein solcher "Gateway" kann z.B. mit einer Zweidrahtleitung oder einer Vierdrahtleitung - für eine Trennung der Übertragungsrichtungen - in einfacher Weise realisiert werden. Des weiteren ist auch der Einsatz von Koaxialleitungen oder Glasfasern möglich.

Es ist wichtig klarzustellen, dass durch keine der erfindungsgemäßen Maßnahmen die elektrische Sicherheit beeinträchtigt wird. Insbesondere die Funktion von Fehlerstromschutzschaltern wird in keiner Weise behindert oder eingeschränkt. Dies ist technisch einfach möglich, weil die für die schnelle Datenübertragung in Frage kommenden Trägerfrequenzen sehr weit oberhalb der Netzfrequenz liegen, so dass eine perfekte frequenzmäßige Trennung der Funktionen schon von Natur aus unterstützt wird.

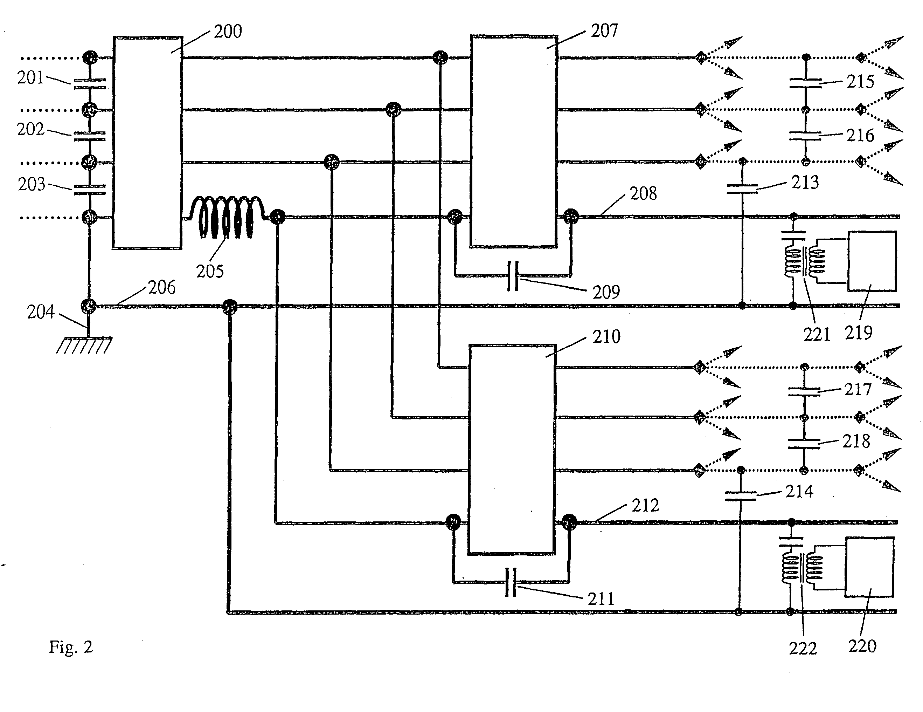

Die weiteren Zeichnungen Fig. 2 bis Fig. 4 zeigen besondere Ausgestaltungen der Erfindung für Gebäudeinstallationen, die vom in Fig. 1 zugrunde gelegten Standard abweichen.

Fig. 2 bezieht sich auf eine Gebäudeinstallation, die mit zwei Fehlerstromschutzschaltern ausgestattet ist. Das hier dargestellte Prinzip kann in einfacher Weise auf eine beliebige Anzahl von Fehlerstromschutzschaltern erweitert werden. Der Hausanschluss zur Versorgungstrafoseite hin weicht nicht von Fig. 1 ab. Man hat hier ebenfalls die drei Kurzschlüsse 201, 202 und 203 zum Erdungspunkt 204. Es folgt der Stromzähler 200, an dessen hausseitigem Ausgang die Drosselspule 205 in den Nullleiter eingefügt wird, wodurch sich die erwünschte hochfrequenzmäßige Isolation dieses Leiters im gesamten Hausnetz ergibt. Jetzt folgen die beiden Fehlerstromschutzschalter 207 und 210, bei denen jetzt die Nullleiteranschlüsse ein- und ausgangsseitig über die Kondensatoren 209 und 211 für hochfrequente Signale verbunden sind. Für die Netzwechselspannung haben die Kondensatoren eine sehr hohe Impedanz und bleiben ohne Wirkung. Hochfrequente Kommunikationssignale hingegen werden durch sie an den Fehlerstromschutzschaltern vorbeigeleitet. Dadurch fliessen zum einen keine HF-Ströme durch die Schutzschalter und zum anderen erhält man eine gute HF-Kopplung der jeweiligen Nullleiterteilnetze 208 und 212 nach den Fehlerstromschutzschaltern, so dass die Kommunikation zwischen den Teilnetzen problemlos möglich ist. Die Signalkopplung von Modems 219, 220 erfolgt wieder in der oben beschriebenen vorteilhaften Weise zwischen Schutzleiter 206 und Nullleiter 208, 212. Der Modemanschluss an Steckdosen geschieht analog zu Fig. 1.

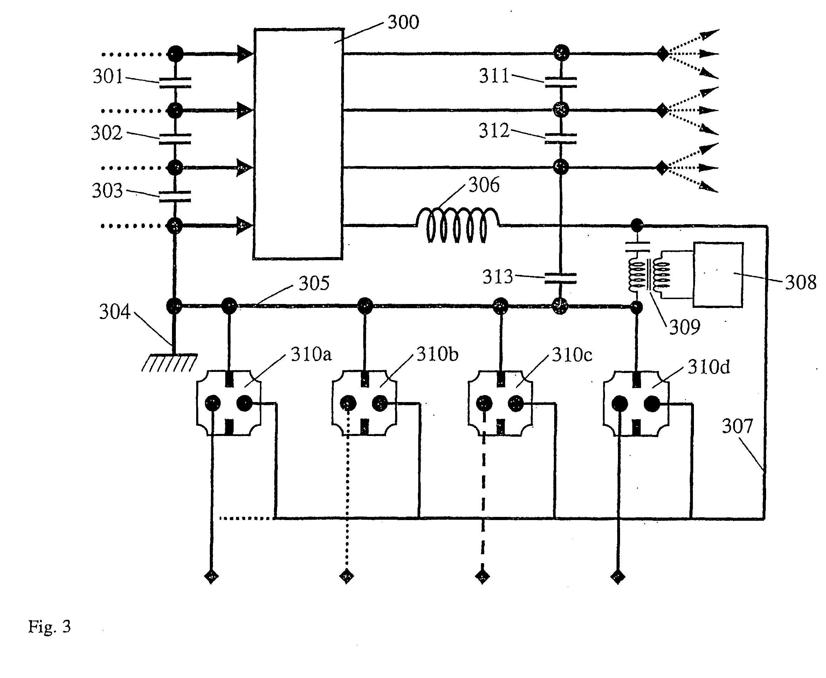

Fig. 3 bezieht sich auf eine Gebäudeinstallation ohne Fehlerstromschutzschalter, die jedoch mit einem Schutzleiter ausgestattet ist. Der Hausanschluss zur Versorgungstrafoseite hin weicht auch hier nicht von Fig. 1 ab. Man hat wieder die drei Kurzschlüsse 301, 302 und 303 zum Erdungspunkt 304. Es folgt der Stromzähler 300, an dessen hausseitigem Ausgang die Drosselspule 306 in den Nullleiter 307 eingefügt wird, wodurch sich die erwünschte hochfrequenzmäßige Isolation dieses Leiters im gesamten Hausnetz ergibt. Die Signalkopplung eines Modems 308 erfolgt wieder in der bereits beschriebenen vorteilhaften Weise zwischen dem Schutzleiter 305 und dem Nullleiter 307. Der Modemanschluss an die exemplarisch eingezeichneten Steckdosen 310a...d geschieht analog zu Fig. 1. Zur Unterstützung der hochfrequenzmäßigen Erdung der drei Phasen kann es auch hier, insbesondere in großen Gebäuden, vorteilhaft sein, zusätzliche Kondensatoren 311, 312 und 313 z.B. in Unterverteilungen einzubauen.

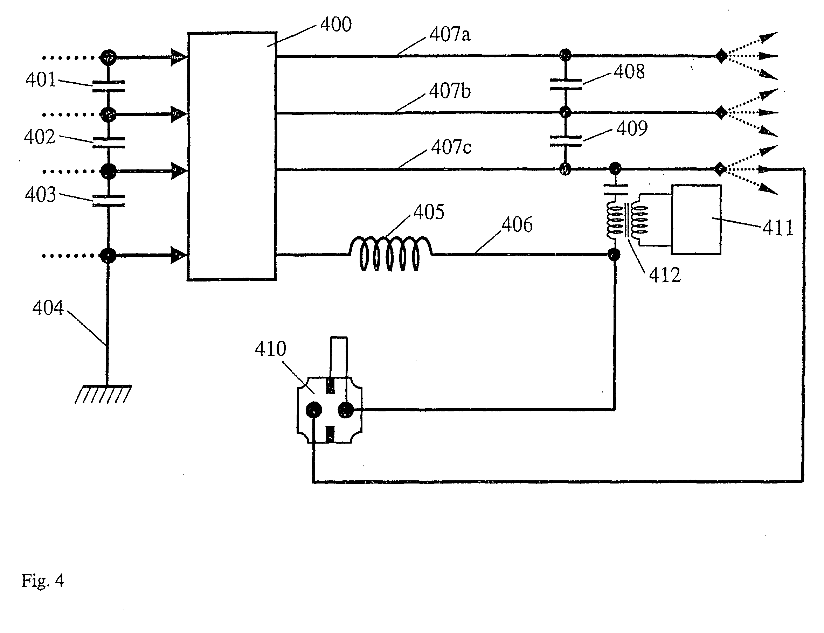

Fig. 4 bezieht sich auf veraltete Gebäudeinstallationen, die weder mit einem Fehlerstromschutzschalter noch mit einem Schutzleiter ausgestattet sind. Der Bestand solcher Alt-Installationen dürfte in Deutschland sehr gering sein, mit abnehmender Tendenz. Dennoch kann die vorliegende Erfindung auch in solchen Altbeständen vorteilhaft bei der schnellen Kommunikation über die Gebäudestromnetze eingesetzt werden.

Der Hausanschluss zur Versorgungstrafoseite hin weicht auch hier nicht von Fig. 1 ab. Man hat wieder die drei Kurzschlüsse 401, 402 und 403 zum Erdungspunkt 404. Es folgt der Stromzähler 400, an dessen hausseitigem Ausgang die Drosselspule 405 in den Nullleiter 406 eingefügt wird, wodurch sich die erwünschte hochfrequenzmäßige Isolation dieses Leiters im gesamten Hausnetz ergibt. Die Signalkopplung eines Modems 411 erfolgt jetzt zwischen dem hochfrequenzmäßig geerdeten Dreiphasensystem 407a, 407b und 407c und dem Nullleiter 406 mittels des Übertragers 412. An einer Steckdose 410 findet die Kopplung zwischen den beiden Polen statt.

Zur Unterstützung der hochfrequenzmäßigen Erdung der drei Phasen kann es auch hier, insbesondere in großen Gebäuden, vorteilhaft sein, zusätzliche Kondensatoren 408 und 409 in Unterverteilungen einzubauen.

Aufgrund des fehlenden Schutzleiters ergeben sich in Strukturen gemäß Fig. 4 einige Nachteile:
- Bei der Signalkopplung muss die Netzwechselspannung abgetrennt werden, die zwischen den signalführenden Leitern ca. 230V beträgt. Der Koppelkondensator im Übertrager 412 muss demnach hinreichend spannungsfest sein und der Übertrager muss eine sichere galvanische Trennung zwischen Modem und Netz bewerkstelligen.
- Die Symmetrie der hochfrequenzführenden Leitersysteme kann in Strukturen nach Fig. 4 geringer sein als bei mitbenutztem Schutzleiter gemäß Fig. 1-3. Daraus kann höhere Gegentakt/Gleichtakt-Konversion resultieren, die zu erhöhter Signalabstrahlung führt.
- Auch die "Nullung" von Steckdosen, d.h. eine Verbindung vom Nullleiter zum Schutzkontakt in der Steckdose, kann sich im Hinblick auf elektromagnetische Verträglichkeit als nachteilig erweisen, weil dadurch hochfrequente Signale auf das Gehäuse angeschlossener Geräte gelangen können und so eine zusätzliche Antennenwirkung entsteht.

Generell lässt die erfindungsgemäße Lösung dennoch stets bessere Ergebnisse sowohl hinsichtlich Übertragungsqualität als auch elektromagnetischer Verträglichkeit erwarten als die bisherige einfache Signalkopplung zwischen Nullleiter und Phase einer Steckdose. Im wesentlichen ergeben sich die Vorteile der erfindungsgemäßen Lösung hier dadurch, dass das gesamte Dreiphasensystem im Hausnetz hochfrequenzmäßig geerdet ist und der Nullleiter als einziger gegenüber dieser "Masse" Hochfrequenz führen kann.

In einer weiteren Ausgestaltung der Erfindung wird anstatt in den Nullleiter eine Drosselspule unmittelbar am Hauserdungspunkt in den Schutzleiter eingefügt, um diesen im gesamten Gebäude hochfrequenzmäßig von den übrigen, die "Masse" darstellenden Leitern zu isolieren. Da der Schutzleiter im regulären Betrieb stromlos ist, kann für die Drossel hochpermeables Ferritmaterial verwendet werden, so dass man bei geringer Baugröße eine hohe Impedanz und damit gute HF-Isolation erzielt. Die Signalkopplung erfolgt auch hier zwischen Nullleiter und Schutzleiter mit allen daraus resultierenden Vorteilen. Hinsichtlich der elektromagnetischen Verträglichkeit kann sich jedoch das Beaufschlagen des Schutzleiters mit Hochfrequenz als Nachteil erweisen, weil dadurch hochfrequente Signale auf das Gehäuse angeschlossener Geräte gelangen können und so eine zusätzliche Antennenwirkung entsteht. Da die hochfrequenzmäßige Isolation jetzt jedoch aufgrund des fehlenden Vormagnetisierungsstroms durch die Drossel erheblich perfekter erfolgen kann, ist davon auszugehen, dass man in dieser Konfiguration mit geringerer Sendeleistung auskommt, und so die erhöhte Abstrahlung durch entsprechende Pegelreduzierung kompensiert werden kann.

## Patentansprüche

1. Verfahren zur Netzkonditionierung zwecks schneller und elektromagnetisch verträglicher Datenübertragung über gebäudeinterne Stromversorgungsnetze, **dadurch gekennzeichnet, dass**
a) in den Nullleiter möglichst nahe am Hauserdungspunkt eine Induktivität eingefügt wird, die für die verwendeten Trägerfrequenzen eine hohe Impedanz hat
b) am Hausanschluß in zwei der drei von der Trafostation ankommenden Phasen L1, L2, L3 Induktivitäten eingebaut sind und die Signalein- bzw. -aus- kopplung für die Kommunikation zwischen Haus und Trafostation auf der Trafoseite dieser Induktivitäten erfolgt
c) am Hausanschluß auf Hausseite ein hochfrequenzmäßiger Kurzschluß aller vier Leiter zum Hauserdungspunkt hin erfolgt
d) für den Fall, dass ein Fehlerstromschutzschalter vorhanden ist, die Induktivität auf Verbraucherseite des Fehlerstromschutzschalters in den Nullleiter eingefügt wird, und zwischen Schutzleiter und der hausseitigen Anschlussklemme des Nullleiters am Fehlerstromschutzschalter ein Hochfrequenzkurzschluss hergestellt wird
e) für den Fall, dass mehrere Fehlerstromschutzschalter vorhanden sind die Induktivität auf der hausabgewandten Seite der Fehlerstromschutzschalter, möglichst nahe am Hauserdungspunkt eingesetzt wird und die einzelnen Fehlerstromschutzschalter an ihren Nullleiterklemmen hochfrequenzmäßig überbrückt werden.

2. Verfahren nach Anspruch 1, **dadurch gekennzeichnet, dass** die Signalein- bzw. -auskopplung für die hausinterne schnelle Datenübertragung an jedem Anschlusspunkt im Gebäude zwischen Nullleiter und Schutzleiter erfolgt.

3. Verfahren nach Anspruch 1, **dadurch gekennzeichnet, dass** die Signalein- bzw. -auskopplung für die hausinterne schnelle Datenübertragung an jedem Anschlusspunkt im Gebäude zwischen Nullleiter und einer der drei Phasen L1, L2 oder L3 erfolgt, wobei alle drei Phasen hochfrequenzmäßig geerdet sind und wobei zur Unterstützung dieser Erdungsfunktion neben dem Hochfrequenzkurzschluss nach 1c) bei Bedarf an mehreren Stellen des Gebäudes zusätzliche Hochfrequenzkurzschlüsse zwischen den Phasen und dem Schutzleiter eingesetzt sind.

4. Verfahren nach Anspruch 1, **dadurch gekennzeichnet, dass** bei besonderer Netzkonfiguration eine Induktivität seriell in den Schutzleiter eingefügt wird, so dass dieser im gesamten Gebäude von den übrigen Leitern und Erde hochfrequenzmäßig isoliert ist, und dass dann die HF-Signaleinspeisung entweder zwischen Schutzleiter und Nullleiter oder Schutzleiter und einer der drei Phasen erfolgt, wobei der Nullleiter und/oder die drei Phasen hochfrequenzmäßig Masse darstellen.

5. Vorrichtung zur Durchführung des Verfahrens nach Anspruch 1 zur Übertragung von Daten über ein gebäudeinternes Stromversorgungsnetz, **dadurch gekennzeichnet, dass**
a) eine Drosselspule (15) seriell in den Nullleiter eines Gebäudeinstallationsnetzes eingebaut ist; so dass das gesamte hausseitige Nullleiternetzwerk für hohe Frequenzen von allen übrigen Leitern und von der Erde getrennt ist,
b) am Hausanschluss in zwei der drei von der Trafostation ankommenden Phasen L1, L2, L3 Drosselspulen (3, 4) mit relativ hoher Induktivität eingebaut sind und die Signalkopplung für die Kommunikation zwischen Haus und Trafostation mittels eines Koppelübertragers (10) auf der Trafoseite dieser Drosseln erfolgt, und
c) am Hausanschluss auf Hausseite drei spannungsfeste Kondensatoren (5, 6, 7) zwischen die Phasen und von einer der Phasen zum Nullleiter geschaltet sind.

6. Vorrichtung nach Anspruch 5, **dadurch gekennzeichnet, dass** beim Vorliegen eines für den Hausanschluss verwendeten 4-Sektor-Kabels die Auswahl der beiden zur Datenübertragung benutzten Phasen derart erfolgt, dass diese Phasen sich im Kabel diagonal gegenüberliegen.

7. Vorrichtung nach Anspruch 5 oder 6, **dadurch gekennzeichnet, dass** beim Vorliegen eines Fehlerstromschutzschalters (14) die Drosselspule (15) auf der Verbraucherseite des Fehlerstromschutzschalters in den Nullleiter eingefügt ist und zwischen dem Schutzleiter und der hausseitigen Anschlussklemme des Nullleiters am Fehlerstromschutzschalter ein Kondensator (16) vorgesehen ist, welcher hochfrequente Signale vom Fehlerstromschutzschalter fernhält.

8. Vorrichtung nach Anspruch 5 oder 6, **dadurch gekennzeichnet, dass** beim Vorliegen mehrerer Fehlerstromschutzschalter (207, 210) die Drosselspule (205) auf der Speiseseite der Fehlerstromschutzschalter eingesetzt ist.

9. Vorrichtung nach Anspruch 8, **dadurch gekennzeichnet, dass** die Drosselspule in der Nähe des Hauserdungspunktes (204) eingesetzt ist.

10. Vorrichtung nach Anspruch 8 oder 9, **dadurch gekennzeichnet, dass** die Fehlerstromschutzschalter (207, 210) an ihren Nullleiterklemmen mit Kondensatoren (209, 210) überbrückt sind, so dass hochfrequente Signale an den Fehlerstromschutzschaltern vobeigeführt werden.

11. Vorrichtung nach einem der Ansprüche 5 - 10, **dadurch gekennzeichnet, dass** die Signalkopplung für die schnelle Kommunikation an jedem Anschlusspunkt im Gebäude zwischen Nullleiter (11a) und Schutzleiter (11) erfolgt, wobei der Schutzleiter hochfrequenzmäßig Masse darstellt und der Nullleiter die hochfrequenten Signale führt.

12. Vorrichtung nach einem der Ansprüche 5 - 10, **dadurch gekennzeichnet, dass** die Signalein- bzw. -auskopplung für die hausinteme schnelle Kommunikation an jedem Anschlusspunkt im Gebäude zwischen Nullleiter und einer der drei Phasen L1, L2 oder L3 erfolgt, wobei neben dem Schutzleiter auch die drei Phasen hochfrequenzmäßig Masse darstellen.

13. Vorrichtung nach Anspruch 12, **dadurch gekennzeichnet, dass** zur Unterstützung dieser Massefunktion Hochfrequenzkurzschlüsse (21, 22, 23) an mehreren Stellen des Gebäudes zwischen den Phasen und dem Schutzleiter eingesetzt sind.

14. Vorrichtung nach einem der Ansprüche 5 bis 13, **dadurch gekennzeichnet, dass** eine Drosselspule mit hoher Induktivität seriell in den Schutzleiter eingefügt ist, so dass dieser im gesamten Gebäude von den übrigen Leitern und Erde hochfrequenzmäßig isoliert ist, und dass die HF-Signalübertragung entweder zwischen Schutzleiter und Nullleiter oder Schutzleiter und einer der drei Phasen erfolgt, wobei der Nullleiter und/oder die drei Phasen hochfrequenzmäßig Masse darstellen.

15. Vorrichtung nach einem der Ansprüche 5 bis 13 **dadurch gekennzeichnet, dass** in Installationsnetzen ohne Schutzleiter eine Drosselspule (405) mit genügend hoher Induktivität auf der Hausseite des Stromzählers seriell in den Nullleiter eingefügt ist, so dass dieser im gesamten Gebäude von den übrigen Leitern und Erde hochfrequenzmäßig isoliert ist, und dass die HF-Signalübertragung zwischen Nullleiter und den hochfrequenzmäßig Masse darstellenden drei Phasen erfolgt.

16. Vorrichtung nach einem der Ansprüche 5 bis 13, **dadurch gekennzeichnet, dass** die Drosselspule (15) derart realisiert ist, dass sie auf das Hutschienensystem eines Zähler- oder Verteilerschranks eingeklinkt und unmittelbar in den entsprechenden Leitungszug eingefügt ist.

17. Vorrichtung nach einem der Ansprüche 5 bis 16, **dadurch gekennzeichnet, dass** die seriell in den Nullleiter eingebaute Drosselspule (15) als Luftspule ausgeführt ist.

18. Vorrichtung nach einem der Ansprüche 5 bis 17, **dadurch gekennzeichnet, dass** die in zwei der drei von der Trafostation ankommenden Phasen eingebauten Drosselspulen (34) einen Kern aus Ferritmaterial aufweisen.

19. Vorrichtung nach einem der Ansprüche 5 bis 18, **dadurch gekennzeichnet, dass** die am Hausanschluss auf Hausseite vorgesehenen drei spannungsfesten Kondensatoren (5, 6, 7) nahe am Hauserdungspunkt platziert sind.

## Claims

1. Method of conditioning mains for the purpose of rapid and electromagnetically compatible data transmission by way of current supply mains internal to a building,
**characterised in that**
a) an inductance having a high impedance for the carrier frequencies employed is introduced into the neutral conductor as close as possible to the building earth point,
b) inductances are incorporated at the building service connection in two of the three phases L1, L2, L3 coming from the transformer station and the signal coupling-in and decoupling for communication between building and transformer station is carried out on the transformer side of these inductances,
c) a short-circuit in terms of high-frequency of all four conductors relative to the building earth point is carried out on the building side at the building service connection,
d) if one fault current circuitbreaker is present, the inductance is introduced into the neutral conductor on the load side of the fault current circuitbreaker and a high-frequency short-circuit is produced between earth conductor and the service connection terminal, which is at the building side, of the neutral conductor at the fault current circuitbreaker and
e) if several fault current circuitbreakers are present the inductance is inserted on the side, which is remote from the building, of the fault current circuitbreaker as close as possible to the building earth point and the individual fault current circuitbreakers are bridged over in terms of high frequency at the neutral conductor terminals thereof.

2. Method according to claim 1, **characterised in that** the signal coupling-in and decoupling for the rapid data transmission internally of a building is carried out at each service connection point in the building between neutral conductor and earth conductor.

3. Method according to claim 1, **characterised in that** the signal coupling-in and decoupling for the rapid data transmission internally of a building is carried out at each service connection point in the building between neutral conductor and one of the three phases L1, L2 and L3, wherein all three phases are earthed in terms of high frequency and wherein to assist this earthing function, apart from the high-frequency short-circuit according to 1c) additional high-frequency short-circuits between the phases and the earth conductor are if needed inserted at several places in the building.

4. Method according to claim 1, **characterised in that** in the case of a special mains configuration an inductance is introduced serially into the earth conductor so that this is insulated in terms of high frequency over the entire building from the remaining conductors and earth and that then the HF signal feed takes place between either earth conductor and neutral conductor or earth conductor and one of the three phases, wherein the neutral conductor and/or the three phases represent ground in terms of high frequency.

5. Device for carrying out the method according to claim 1 for transmission of data by way of a current supply mains internal to a building, **characterised in that**
a) a choke coil (15) is serially incorporated in the neutral conductor of a building installation mains so that the entire neutral conductor network, at the building side is, for high frequencies, separated from all remaining conductors and from the earth,
b) choke coils (3, 4) with relatively high inductance are incorporated at the building service connection in two of the three phases L1, L2, L3 coming from the transformer station and the signal coupling for the communication between building and transformer station is carried out by means of a coupling transformer (10) on the transformer side of these chokes and
c) three voltage-stable capacitors (5, 6, 7) are connected between the phases and from one of the phases to the neutral conductor at the building service connection on the building side.

6. Device according to claim 5, **characterised in that** in the presence of a 4-sector cable used for the building service connection the selection of the two phases used for the data transmission is carried out in such a manner that these phases are diagonally opposite one another in the cable.

7. Device according to claim 5 or 6, **characterised in that** in the presence of one fault current circuitbreaker (14) the choke coil (15) is introduced into neutral conductor on the load side of the fault current circuitbreaker and a capacitor (16), keeping high-frequency signals away from the fault current circuitbreaker is provided between the circuitbreaker and the service connection terminal, which is at the building side, of the neutral conductor at the fault current circuitbreaker.

8. Device according to claim 5 or 6, **characterised in that** in the presence of several fault current circuitbreakers (207, 210) the choke coil (205) is inserted on the feed side of the fault current circuitbreaker.

9. Device according to claim 8, **characterised in that** the choke coil is inserted in the vicinity of the building earth point (204).

10. Device according to claim 8 or 9, **characterised in that** the fault current circuitbreakers (207, 210) are bridged over at the neutral conductor terminals thereof by capacitors (209, 210) so that high-frequency signals are taken past the fault current circuitbreakers.

11. Device according to one of claims 5 to 10, **characterised in that** the signal coupling for rapid communication is carried out at each service connection point in the building between neutral conductor (11a) and earth conductor (11), wherein the earth conductor represents ground in terms of high frequency and the neutral conductor conducts the high-frequency signals.

12. Device according to one of claims 5 to 10, **characterised in that** the signal coupling-in and decoupling for the rapid communication internally of a building is carried out at each service connection point in the building between neutral conductor and one of the three phases L1, L2 and L3, wherein apart from the earth conductor the three phases also represent ground in terms of high frequency.

13. Device according to claim 12, **characterised in that** in support of this ground function, high-frequency short-circuits (21, 22, 23) are inserted at several places in the building between the phases and the earth conductor.

14. Device according to one of claims 5 to 13, **characterised in that** a choke coil with high inductance is serially introduced into the earth conductor so that this is insulated in terms of high frequency over the entire building from the remaining conductors and earth and that the HF signal transmission takes place between either earth conductor and neutral conductor or earth conductor and one of the three phases, wherein the neutral conductor and/or the three phases represent ground in terms of high frequency.

15. Device according to one of claims 5 to 13, **characterised in that** in installation mains without earth conductor a choke coil (405) with sufficiently high inductance is introduced serially into the neutral conductor on the building side of the current meter so that this conductor is insulated in terms of high frequency over the entire building from the remaining conductors and earth and that the HF signal transmission takes place between neutral conductor and the three phases representing ground in terms of high frequency.

16. Device according to one of claims 5 to 13, **characterised in that** the choke coil (15) is realised in such a manner that it is clipped onto the top-hat rail system of a meter cabinet or distributor cabinet and is introduced directly into the corresponding conductor section.

17. Device according to one of claims 5 to 16, **characterised in that** the choke coil (15) serially incorporated in the neutral conductor is constructed as an air-core coil.

18. Device according to one of claims 5 to 17, **characterised in that** the choke coils (34) incorporated in two of the three phases coming from the transformer station have a core of ferrite material.

19. Device according to one of claims 5 to 18, **characterised in that** the three voltage-stable capacitors (5, 6, 7) provided at the building service connection on the building side are placed near the housing earth point.

## Revendications

1. Procédé pour rendre un réseau apte à la transmission rapide de données et compatible sur le plan électromagnétique via des réseaux d'alimentation électrique à l'intérieur de bâtiments, **caractérisé en ce que** :
a) une inductance qui possède une impédance élevée pour les fréquences porteuses utilisées est insérée dans le neutre si possible à proximité du point de mise à la terre de la maison
b) des inductances sont montées au raccordement de la maison dans deux des trois phases L1, L2, L3 arrivant de la station de transformateur et le couplage et/ou découplage de signal pour la communication entre la maison et la station de transformateur se fait du côté transformateur de ces inductances
c) un court-circuit, en ce qui concerne les hautes fréquences, de tous les quatre conducteurs est exécuté au raccordement de la maison du côté maison en direction du point de mise à la terre de la maison
d) pour le cas où un disjoncteur de courant de défaut est prévu, l'inductance est insérée dans le neutre du côté utilisation du disjoncteur et un court-circuit à haute fréquence est établi entre conducteur de protection et la borne d'alimentation du neutre côté maison au disjoncteur de courant de défaut
e) pour le cas où plusieurs disjoncteurs de courant de défaut sont prévus, l'inductance est montée sur le côté des disjoncteurs opposé à la maison, si possible à proximité du point de mise à la terre de la maison, et chaque disjoncteur différentiel sont pontés en ce qui concerne les hautes fréquences à leur borne de neutre.

2. Procédé selon la revendication 1, **caractérisé en ce que** le couplage et/ou le découplage de signal pour la transmission rapide de données à l'intérieur de la maison est exécuté à chaque point de raccordement dans le bâtiment entre neutre et conducteur de protection.

3. Procédé selon la revendication 1, **caractérisé en ce que** le couplage et/ou le découplage de signal pour la transmission rapide de données à l'intérieur de la maison est exécuté à chaque point de raccordement dans le bâtiment entre neutre et une des trois phases L1, L2 ou L3, les trois phases étant ainsi toutes mises à la terre en ce qui concerne les hautes fréquences, et pour assister cette fonction de mise à la terre, outre le court-circuit à haute fréquence selon 1c), des courts-circuits supplémentaires à haute fréquence sont utilisés en cas de besoin à plusieurs endroits du bâtiment entre les phases et le conducteur de protection.

4. Procédé selon la revendication 1, **caractérisé en ce qu'**en cas de configuration particulière du réseau une inductance est insérée en série dans le conducteur de protection de telle sorte que celui-ci est isolé en ce qui concerne les hautes fréquences du reste des conducteurs et de la terre dans l'ensemble du bâtiment, et **en ce que** l'injection de signal HF se fait alors soit entre conducteur de protection et neutre, soit entre conducteur de protection et une des trois phases, le neutre et/ou les trois phases représentant la masse en ce qui concerne les hautes fréquences.

5. Dispositif pour la mise en oeuvre du procédé selon la revendication 1 pour la transmission de données via un réseau d'alimentation à l'intérieur d'un bâtiment,
**caractérisé en ce que** :
a) une bobine d'inductance (15) est montée en série dans le neutre d'un réseau d'installation de bâtiment de telle sorte que l'ensemble du réseau de neutres côté maison pour les hautes fréquences est déconnecté de tous les conducteurs restants et de la terre,
b) des bobines d'inductance (3, 4) dotées d'une inductance relativement élevée sont montées au raccordement de la maison dans deux des trois phases L1, L2, L3 provenant de la station transformateur, et le couplage de signal pour la communication entre maison et station transformateur se fait au moyen d'un translateur de couplage (10) du côté transformateur de ces bobines et,
c) au niveau du raccordement de la maison côté maison, trois condensateurs (5, 6, 7) à tension invariable sont mis en circuit entre les phases et l'une des phases allant au neutre.

6. Dispositif selon la revendication 5, **caractérisé en ce qu'**en présence d'un câble à 4 secteurs utilisé pour le raccordement de la maison, le choix des deux phases utilisées pour la transmission de données se fait de telle sorte que ces phases sont diagonalement opposées dans le câble.

7. Dispositif selon la revendication 5 ou 6, **caractérisé en ce qu'**en présence d'un disjoncteur de courant de défaut (14), la bobine d'inductance (15) est insérée dans le neutre du côté récepteur du disjoncteur et un condensateur (16), lequel élimine les signaux à haute fréquence du disjoncteur différentiel, est prévu entre le conducteur de protection et la borne d'alimentation côté maison du neutre au disjoncteur.

8. Dispositif selon la revendication 5 ou 6, **caractérisé en ce qu'**en présence de plusieurs disjoncteurs (207, 210), la bobine d'inductance (205) est montée du côté de l'alimentation des disjoncteurs.

9. Dispositif selon la revendication 8, **caractérisé en ce que** la bobine d'inductance est montée à proximité du point de mise à la terre de la maison (204).

10. Dispositif selon la revendication 8 ou 9, **caractérisé en ce que** les disjoncteurs (207, 210) sont pontés à leur borne de neutre avec des condensateurs (209, 210) de sorte que les signaux à haute fréquence passent à côté des disjoncteurs.

11. Dispositif selon l'une des revendications 5 à 10, **caractérisé en ce que** le couplage de signal pour la communication rapide à chaque point de raccordement dans le bâtiment est exécuté entre neutre (11a) et conducteur de protection (11), le conducteur de protection représentant la masse en ce qui concerne les hautes fréquences et le neutre conduisant les signaux à haute fréquence.

12. Dispositif selon l'une des revendications 5 à 10, **caractérisé en ce que** le couplage et/ou découplage de signal pour la communication rapide à l'intérieur de la maison se fait à chaque point de raccordement dans le bâtiment entre neutre et une des trois phases L1, L2 ou L3, sachant que les trois phases, outre le conducteur de protection, représentent également la masse en ce qui concerne les hautes fréquences.

13. Dispositif selon la revendication 12, **caractérisé en ce que** pour assister cette fonction de masse, des courts-circuits à haute fréquence (21, 22, 23) sont établis à plusieurs endroits du bâtiment entre les phases et le conducteur de protection.

14. Dispositif selon l'une des revendications 5 à 13, **caractérisé en ce qu'**une bobine d'inductance à forte inductance est insérée en série dans le conducteur de protection de telle sorte que celui-ci est isolé, en ce qui concerne les hautes fréquences, du reste des conducteurs et de la terre dans l'ensemble du bâtiment, et **en ce que** la transmission de signal HF se fait soit entre conducteur de protection et neutre, soit entre conducteur de protection et une des trois phases, le neutre et/ou les trois phases représentant la masse en ce qui concerne les hautes fréquences.

15. Dispositif selon l'une des revendications 5 à 13, **caractérisé en ce que** dans les réseaux d'installation sans conducteur de protection, une bobine d'inductance (405) à inductance suffisamment élevée est insérée en série dans le neutre côté maison du compteur électrique de telle manière que ce neutre soit isolé dans l'ensemble du bâtiment des autres conducteurs et de la terre du point de vue de la haute fréquence, et **en ce que** la transmission de signal HF se fait entre neutre et les trois phases représentant la masse en ce qui concerne les hautes fréquences.

16. Dispositif selon l'une des revendications 5 à 13, **caractérisé en ce que** la bobine d'inductance (15) est réalisée de telle façon qu'elle est encliquetée sur le système de rails à chapeau d'une cellule de compteurs ou bloc de distribution et est insérée directement dans le chemin de connexion correspondant.

17. Dispositif selon l'une des revendications 5 à 16, **caractérisé en ce que** la bobine d'inductance (15) montée en série dans le neutre est constituée par une bobine sans fer.

18. Dispositif selon l'une des revendications 5 à 17, **caractérisé en ce que** les bobines d'inductance (34) montées dans deux des trois phases provenant de la station transformatrice comportent un noyau en ferrite.

19. Dispositif selon l'une des revendications 5 à 18, **caractérisé en ce que** les trois condensateurs (5, 6, 7) à tension invariable prévus au raccordement de la maison du côté maison sont placés à proximité du point de mise à la terre de la maison.
